## Europäisches Patentamt

## European Patent Office

## Office européen des brevets

(11) Publication number: **0 225 907**
**B1**

## EUROPEAN PATENT SPECIFICATION

(45) Date of publication of the patent specification:
**27.12.89**

(51) Int. Cl.⁴: **G 01 J 5/12**

(21) Application number: **86903529.5**

(22) Date of filling: **13.06.86**

(86) International application number:
**PCT/GB 86/00345**

(87) International publication number:
**WO 86/07450 (18.12.86 Gazette 86/27)**

(54) **IMPROVEMENTS IN PYRGEOMETERS.**

(30) Priority: **13.06.85 GB 8515024**

(43) Date of publication of application:
**24.06.87 Bulletin 87/26**

(45) Publication of the grant of the patent:
**27.12.89 Bulletin 89/52**

(84) Designated Contracting States:
**DE FR GB**

(56) References cited:
**DE-B-1 162 580**
**GB-A-1 342 710**
**US-A-3 405 273**
**US-A-4 029 521**
**US-A-4 111 717**

(73) Proprietor: **THE SECRETARY OF STATE FOR DEFENCE, Whitehall, London SW1A 2HB (GB)**

(72) Inventor: **FOOT, John, Stuart 3 Arthur Road, Wokingham, Berks RG11 25S (GB)**

(74) Representative: **Beckham, Robert William, Procurement Executive Ministry of Defence Patents 1A(4), Room 2014, Empress State Building Lillie Road London SW6 1TR (GB)**

LIBER, STOCKHOLM 1989

EP 0 225 907 B1

## Description

The present invention is concerned with pyrgeometers suitable for measurement of infrared radiation and improvements therein, more particularly with an instrument possessing a lower susceptibility to internal thermal gradients than known instruments.

In the known pyrgeometers adapted for the measurement infrared radiation the instruments employ a thermopile location beneath a dome that selectively transmits only longwave (over 4 μm) radiation. The thermopile hot junctions are exposed to the incident radiation whilst the cold junctions are shielded from the incident radiation. The thermopiles are normally in the form of wire wound thermocouples, wound on large metal formers, the cold junctions of which are in thermal contact with the metal former and located in the body of the instrument. This arrangement is susceptible to thermal gradients in the instrument which may in turn lead to spurious signals and results.

In other forms of the instrument the thermopile takes the form of a track of two alternating metallic compositions deposited on a substrate mounted across an orifice in the body of the instrument, the hot junctions being generally located in the centre of the orifice and the cold junctions being located in proximity to the periphery of the substrate. The latter can be kept cold by coating with a radiation-reflecting substance and by use of the heat sink properties of the body.

UK Patents Nos 1 342 710 and 1 603 363, and US patents 3 405 273 and 3 424 624, all describe such instruments in which one of the junction types is held at a reference temperature by location in proximity to a heat sink. In practice, these may be either the hot or the cold junctions.

Such instruments suffer however from the disadvantage that they may provide an erroneous reading when the surroundings are changing in temperature, the centre of the substrate being able to adapt more quickly than the body of the instrument.

According to this invention a pyrgeometer for measuring infra-red radiation has a sensor which includes a thermopile comprising a plurality of thermocouple junctions between at least two different metallic compositions alternating along a thermocouple track deposited on one surface of a planar substrate mounted across an essentially circular orifice of a body acting as a heat sink, hot junctions being located in infra-red absorbing regions of the substrate and cold junctions being located in infra-red reflecting regions of the substrate, characterised in that the deposited thermocouple track follows a path generally circumferential about the centre of the orifice and adjacent hot and cold junctions are located on the substrate substantially equidistant from the heat sink.

The invention will now be described in greater detail and with reference to the drawings, of which

Figure 1 is a section of a completely assembled pyrgeometer, and

Figures 2 and 3 are plan views of the sensor devices used in the pyrgeometer, the sensor of Figure 3 being a modification of Figure 2.

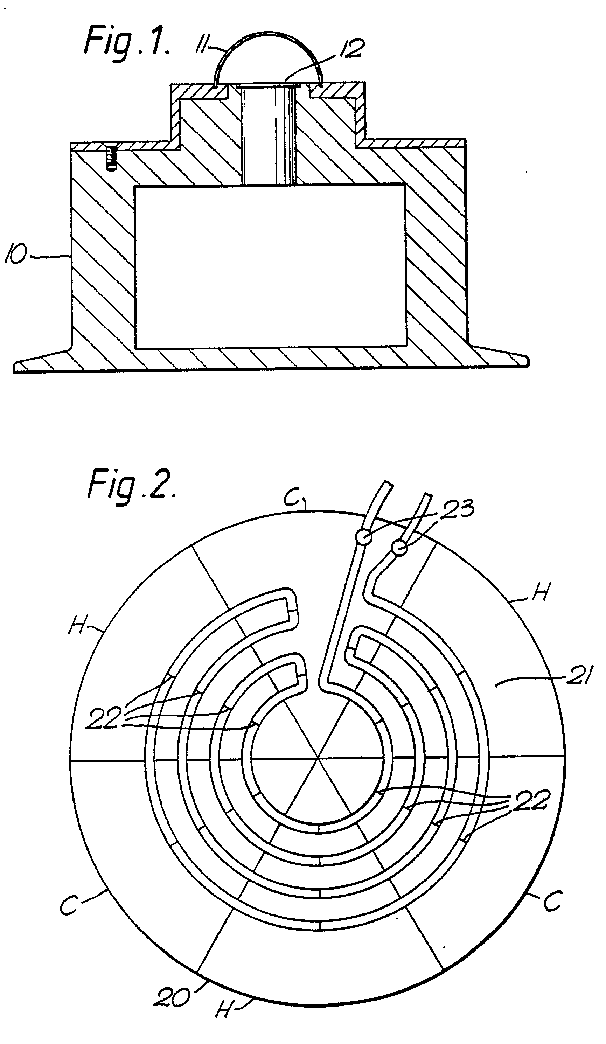

Figure 1 shows an instrument body 10 mountable in a suitable location. The instrument has a domed silicon window 11 for having substantially uniform transmission characteristics for permitting radiation to be incident upon the sensor. The sensor 12 is located in the body of the instrument. In this embodiment a hemispherical window is advantageous because incident radiation will be uniformly transmitted across the hemisphere to the sensor and the possibility of distortion effects are thereby reduced.

Figure 2 is a plan view of the sensor element 12. The sensor body 20 is formed from a substrate base of non-conducting material. On the surface of the substrate base is a metal track 21. The metal track comprises at least two different metals deposited sequentially around the track so as to form a plurality of thermocouples connected in series and comprising a thermopile. The thermocouple junctions 22 are located on the surface of the substrate and are the contact points of two dissimilar metals. In this embodiment it has been found to be advantageous to use antimony and bismuth as the thermocouple metals. The use of a plurality of thermocouples is advantageous because it results in an algebraic summation of the thermally generated voltages thereby permitting easier and more accurate detection of a temperature gradient. The contact points 23 enable wires to be contacted to the ends of the thermocouples, these wires then being connectable to remotely located voltage detection means. Further advantages arising from the use of a plurality of thermocouples located on different parts of the substrate are the minimizing of any spurious signals or temperature measurements caused by local temperature gradients. The substrate is separated into six segmented regions, three of which are coated with an infra-red radiation absorbing material, which in this embodiment is optical matt black paint, although any suitable infra-red absorber will suffice. The other regions are left uncoated and have only bare metal junctions which will reflect infra-red radiation. These separate regions are labelled H and C. T.he regions labelled H are those coated with the infra-red absorbing material and those labelled c are bare metal. The effect of this is to reflect the incident infra-red radiation from the 'C' regions and absorb it in the 'H' regions. As a consequence there arises a temperature differential between the two regions. It will be noticed that successive thermocouple junctions 22 are located in the 'H' and 'C' regions. The junctions in the 'H' region are the hot junctions and those in the 'C' region form the cold junctions. The incoming radiation will cause the temperature of the hot junctions to rise, thereby establishing a temperature differential between the hot and cold temperatures of cold junctions of the thermocou-

ples. This results in a voltage across the thermopile terminals which is dependent upon the level of incident radiation. From the differential voltage the level of incident radiation may be determined. A particular advantage of the present arrangement is that the thermocouples are all in close proximity and spurious effects due to thermal gradients in the body of the instrument due to spatial separation of the junctions are largely eliminated.

The metal tracks may be conveniently deposited on the surface of the substrate by the use of masks and known vapour deposition processes.

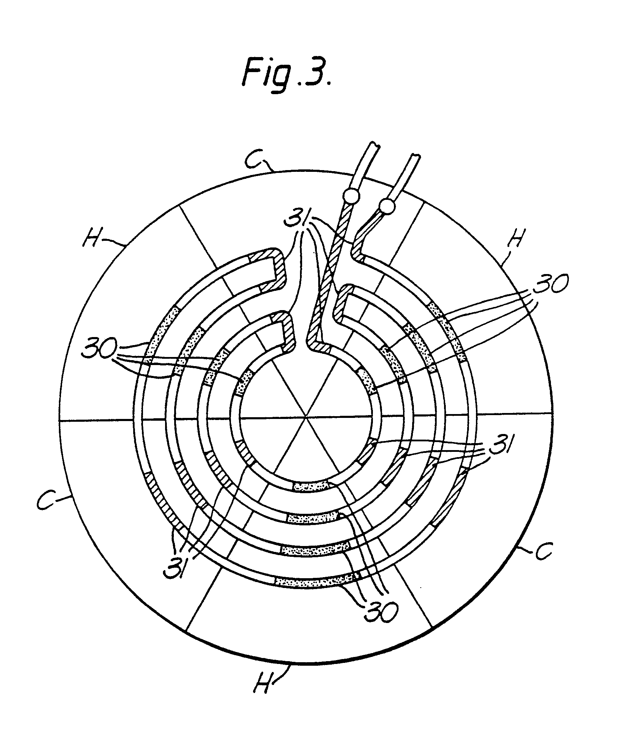

Figure 3 shows an alternative arrangement of thermocouple tracks intended to improve the spectral consistency of the response over the region of particular interest (4 - 100 μm). The layout of the tracks is the same as that of Figure 2 but with the following alterations. A gold track is used to interconnect the antimony and bismuth thermocouple metals. The gold strips 30 and 31 link antimony and bismuth track elements. Thus each junction has gold as one of the metals. Gold is an excellent infra-red radiation reflector with a substantially constant coefficient of reflectivity in the 4 - 100 μm waveband and so particularly suitable as a reflecting material for this application. Thus the infrared reflecting regions C are those having bare metal gold tracks 31. The infra-red absorbing regions H, also have the interconnecting gold layer 30 but in this instance it is painted with an optical matt black paint to enable it to absorb the infra-red radiation. The differential heating is generated as explained previously and because of the symmetrical nature of the junctions the combined thermo-electric properties of the gold/antimony and gold/bismuth junctions are equivalent to a single bismuth/antimony junction.

An alternative form of the construction shown in Figure 1 is one in which the thermocouple track is deposited on the lower surface of the sensor body, ie the surface which will face away from the radiation to be measured. As before, the upper surface of the sensor body is coated to define the hot and cold regions of the substrate, the hot regions of the substrate being defined by a front coating of optical matt black paint, and the cold regions being coated with gold. By this means, the track can be coated with a layer of lacquer or other protective substance.

## Claims

1. A pyrgeometer for measuring infra-red radiation having a sensor which includes a thermopile comprising a plurality of thermocouple junctions between at least two different metallic compositions alternating along a thermocouple track deposited on one surface of a planar substrate mounted across an essentially circular orifice of a body (10) acting as a heat sink, hot junctions being located in infra-red absorbing regions of the substrate and cold junctions being located in infra-red reflecting regions of the substrate, characterised in that the deposited thermocouple track (21) follows a path generally circumferential about the centre of the orifice and adjacent hot and cold junctions (22) are located on the substrate (20) substantially equidistant from the heat sink.

2. A pyrgeometer as claimed in Claim 1, further characterised in that the absorbing regions (H) and reflecting regions (C) of the substrate (20) are arranged as alternating sectors extending from the centre of the orifice.

3. A pyrgeometer as claimed in either preceding claim further characterised in that the absorbing regions (H) of the substrate are coated with an infra-red absorbing material and the cold junctions on the reflecting regions (C) of the substrate are coated with gold.

4. A pyrgeometer as claimed in Claim 3 further characterised in that the gold coating forms part of a combined first metal - gold and gold - second metal cold junction.

5. A pyrgeometer as claimed in either Claim 1 or claim 2 further characterised in that the substrate (20) comprises a sheet of material and the thermocouple track is deposited on the surface of the substrate which will face away from the radiation to be measured, the hot and cold regions of the substrate being formed by the deposition on its other surface of an infra-red absorber and a metallic reflector respectively.

## Patentansprüche

1. Pyrgeometer zum Messen infraroter Strahlung, mit einem Fühler, der eine Thermosäule mit einer Mehrzahl von Thermoelement-Verbindungen zwischen mindestens zwei verschiedenen Metallzusammensetzungen aufweist, die miteinander abwechselnd entlang einer auf einer Oberfläche eines ebenen Substrats aufgebrachten Thermoelementenbahn angeordnet sind, wobei heiße Verbindungen an infrarotabsorbierenden Bereichen des Substrats und kalte Verbindungen an infrarotreflektierenden Bereichen des Substrats gelegen sind, dadurch gekennzeichnet, daß das Substrat (13) über einer etwa kreisförmigen Öffnung eines als Wärmesumpf wirkenden Körpers (10) montiert ist und daß benachbarte heiße und kalte Verbindungen (22) mit im wesentlichen gleichen Abständen vom Wärmesumpf auf dem Substrat angeordnet sind.

2. Pyrgeometer nach Anspruch 1, dadurch gekennzeichnet, daß die Thermoelementenbahn (21) einem etwa in Umfangsrichtung um das Zentrum der Öffnung verlaufenden Pfad folgt und die absorbierenden und reflektierenden Bereiche des Substrats als miteinander abwechselnde, vom Zentrum der Öffnung ausgehende Sektoren ausgebildet sind.

3. Pyrgeometer nach einem der vorhergehenden

EP 0 225 907 B1

Ansprüche, dadurch gekennzeichnet, daß die absorbierenden Bereiche des Substrats mit einem infrarotabsorbierenden Material beschichtet und die kalten Verbindungen auf den reflektierenden Bereichen des Substrats mit Gold beschichtet sind.

4. Pyrgeometer nach Anspruch 3, dadurch gekennzeichnet, daß die Goldbeschichtung Teil einer kombinierten kalten Verbindung Erstmetall-Gold und Gold-Zweitmetall ist.

5. Pyrgeometer nach Anspruch 1 oder 2, dadurch gekennzeichnet, daß das Substrat eine Materialfolie aufweist und die Thermoelementenbahn auf derjenigen Oberfläche des Substrats aufgebracht ist, die von der zu messenden Strahlung weg weist, und daß die heißen und kalten Bereiche des Substrats durch Aufbringen eines Infrarotabsorbers bzw. eines metallischen Reflektors auf seiner anderen Oberfläche gebildet sind.

**Revendications**

1. Un pyrgéomètre pour mesurer le rayonnement infrarouge, comportant un capteur qui comprend une thermopile comportant un ensemble de jonctions de thermocouples entre au moins deux compositions métalliques différentes qui alternent le long d'une piste de thermocouples qui est déposée sur une surface d'un substrat plan monté sur un orifice pratiquement circulaire d'un corps (10) qui fait fonction de radiateur thermique, des jonctions chaudes étant placées dans des régions du substrat qui absorbent l'infrarouge et des jonctions froides étant placées dans des régions du substrat qui réfléchissent l'infrarouge, caractérisé en ce que la piste de thermocouples déposée (21) suit un chemin qui correspond de façon générale à une circonférence qui entoure le centre de l'orifice, et des jonctions chaudes et froides adjacentes (22) sont placées sur le substrat (20) de façon pratiquement équidistante du radiateur thermique.

2. Un pyrgéomètre selon la revendication 1, caractérisé en outre en ce que les régions absorbantes (H) et les régions réfléchissantes (C) du substrat (20) sont disposées sous la forme de secteurs alternés s'étendant à partir du centre de l'orifice.

3. Un pyrgéomètre selon l'une quelconque des revendications précédentes, caractérisé en outre en ce que les régions absorbantes (H) du substrat sont revêtues d'un matériau absorbant l'infrarouge, et les jonctions froides sur les régions réfléchissantes (C) du substrat sont revêtues avec de l'or.

4. Un pyrgéomètre selon la revendication 3, caractérisé en outre en ce que le revêtement d'or fait partie d'une jonction froide combinée premier métal-or et or-second métal.

5. Un pyrgéomètre selon la revendication 1 ou la revendication 2, caractérisé en outre en ce que le substrat (20) consiste en une feuille d'un matériau et la piste de thermocouples est déposée sur la surface du substrat qui est orientée du côté opposé à celui par lequel arrive le rayonnement à mesurer, les régions chaudes et froides du substrat étant respectivement formées par le dépôt sur son autre surface d'un absorbant pour l'infrarouge et d'un réflecteur métallique.

*Fig .1.*

*Fig .2.*

1

Fig.3.